# EUROPEAN PATENT APPLICATION

(11) **EP 3 581 400 A1**
(43) Date of publication of application: **18.12.2019**
(21) Application number: 18751897.2
(22) Date of filing: 09.02.2018
(51) Int. Cl.: B60C 9/18, B60C 9/20

(54) **TIRE**

(30) Priority: 13.02.2017 JP 2017023815
(71) Applicant: Bridgestone Corporation, Tokyo 104-8340 (JP)
(72) Inventor: OTA, Saki, Tokyo 104-8340 (JP)
(74) Representative: Oxley, Robin John George
(86) International application number: PCT/JP2018/004743
(87) International publication number: WO 2018/147450

(57) **Abstract**

Provided is a tire that has a spiral cord layer including reinforcing cords on a tire crown portion to inhibit breakage of the reinforcing cords caused by a projection input given to an end of the spiral cord layer during running. The tire includes: a carcass (14) toroidally extending between a pair of bead portions (13); and a spiral cord layer 1 disposed tire-radially outside the crown portion of the carcass (14) and including an upper layer (1A) and a lower layer (1B) that are formed by spirally winding the reinforcing cords. An auxiliary belt layer (17) is disposed tire-radially outside the spiral cord layer and an angle of belt cords in the auxiliary belt layer with respect to a tire circumferential direction is in a range of 0° to 45°.

## Description

### TECHNICAL FIELD

The present invention relates to tires, and more particularly, to an improved tire that includes, in the crown portion, a spiral cord layer having an upper layer and a lower layer formed by spirally winding reinforcing cords, and an auxiliary belt layer disposed tire-radially outside the spiral cord layer.

### BACKGROUND ART

Conventionally, various studies on tire reinforcing members have been conducted. For example, a structure of the belt constituting a reinforcing member of a tire for passenger vehicles typically includes two or more crossing belt layers, in which reinforcing cords run in directions crossing each other, disposed tire-radially outside the crown portion of the carcass serving as a skeleton member of the tire. Other known modes of a belt structure include a spiral winding structure in which two belt layers, an upper layer and a lower layer, are disposed such that reinforcing cords in the layers are crossed, and the reinforcing cords are folded back at ends of the belt layers to extend from one belt layer to the other belt layer.

As an example of such structure, Patent Document 1 discloses a pneumatic radial tire having a belt structure disposed on the outer periphery of the carcass layer in the tread portion, the belt structure including an annular core belt layer having reinforcing cords wound at an angle of substantially zero with respect to the tire circumferential direction, and a covering belt layer having reinforcing cords spirally wound therearound. The patent document also discloses that a belt protection layer is disposed, if necessary, on the outer circumferential side of the belt structure.

### RELATED ART DOCUMENT

### PATENT DOCUMENT

Patent Document 1: JP2004-1609A

### SUMMARY OF THE INVENTION

### PROBLEMS TO BE SOLVED BY THE INVENTION

As disclosed in Patent Document 1, placing a spiral cord layer made up of substantially two layers, an upper layer and a lower layer, by spirally winding reinforcing cords on the outer periphery of the carcass layer is known. However, in the case where a spiral cord layer is disposed on the tire crown portion, reinforcing cords included in the spiral cord layer may be broken when a projection input is given to an end of the spiral cord layer, and thus an improvement has been desired.

Therefore, an object of the present invention is to inhibit breakage of reinforcing cords that are included in the spiral cord layer disposed on the crown portion of a tire, the breakage being caused by a projection input given to an end of the spiral cord layer during running.

### MEANS FOR SOLVING THE PROBLEMS

To solve the above-described problem, the present inventor intensively studied to find that the problem can be solved by disposing an auxiliary belt layer having a predetermined cord angle tire-radially outside the spiral cord layer, and thereby has completed the present invention.

That is, the tire of the present invention includes: a carcass toroidally extending between a pair of bead portions; and a spiral cord layer disposed tire-radially outside a crown portion of the carcass and including an upper layer and a lower layer that are formed by spirally winding reinforcing cords,
wherein an auxiliary belt layer is disposed tire-radially outside the spiral cord layer and an angle of belt cords in the auxiliary belt layer with respect to a tire circumferential direction is in a range of 0° to 45°.

The tire of the present invention preferably includes a core cord layer between the upper layer and the lower layer of the spiral cord layer, and an angle of core cords in the core cord layer with respect to the tire circumferential direction is preferably in a range of 40° to 90°. In the tire of the present invention, an angle of the reinforcing cords in the spiral cord layer with respect to the tire circumferential direction is preferably in a range of 12° to 90°.

### EFFECTS OF THE INVENTION

According to the present invention, a tire that has a spiral cord layer including reinforcing cords on the crown portion of the tire can achieve inhibiting breakage of the reinforcing cords caused by a projection input given to an end of the spiral cord layer during running.

### BRIEF DESCRIPTION OF THE DRAWINGS

FIG. 1 is a cross-sectional view in the tire width direction illustrating an example configuration of a tire for trucks and buses according to the present invention.
FIG. 2 is a cross-sectional view in the tire width direction illustrating an example configuration of a tire for passenger vehicles according to the present invention.
FIG. 3 is a cross-sectional view in the tire width direction illustrating an example configuration of a tire for construction vehicles according to the present invention.
FIG. 4 is a graph indicating states of tensile forces applied to cords in four individual belts that are successively disposed tire-radially outside a crown portion of a carcass in a tire.
FIG. 5 is a graph indicating states of tensile forces applied to cords in individual layers in a tire having a structure in which a spiral cord layer and an auxiliary belt layer are successively disposed tire-radially outside a crown portion of a carcass, and a core cord layer is disposed between an upper layer and a lower layer of the spiral cord layer.

### MODE FOR CARRYING OUT THE INVENTION

The present invention will now be described in detail with reference to the drawings.

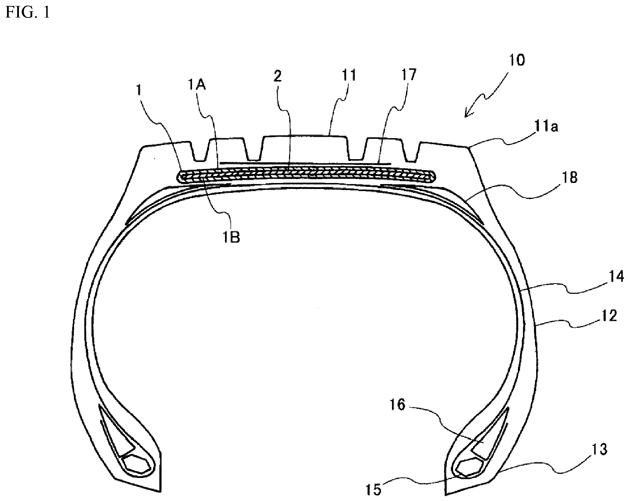

FIG. 1 is a cross-sectional view in the tire width direction illustrating a tire for trucks and buses as an example of a tire of the present invention. A tire 10 as illustrated includes: a tread portion 11 forming a ground contact part; a pair of side wall portions 12 continuous with both ends of the tread portion 11 and extending tire-radially inward; and a bead portion 13 continuously extending on the inner circumferential side of each of the side wall portions 12. The tread portion 11, the side wall portions 12, and the bead portions 13 are reinforced with a carcass 14 composed of a single carcass ply toroidally extending from one bead portion 13 to the other bead portion 13. In the illustrated tire for trucks and buses 10, a bead core 15 is embedded in each of the pair of the bead portions 13, and the carcass 14 is turned up around each of the bead cores 15 from the inside to the outside of the tire and is anchored. In addition, a bead filler 16 is disposed tire-radially outside the bead core 15.

The tire of the present invention includes a spiral cord layer 1 disposed tire-radially outside the crown portion of the carcass 14, the spiral cord layer 1 having a structure in which an upper layer 1A and a lower layer 1B are formed by spirally winding reinforcing cords. In the example illustrated in FIG. 1, a core cord layer 2 is further disposed between the upper layer 1A and the lower layer 1B of the spiral cord layer 1.

An important point of the present invention is that an auxiliary belt layer 17 is disposed tire-radially outside the spiral cord layer 1 with belt cords in the auxiliary belt layer 17 making an angle within a range of 0° to 45° with respect to the tire circumferential direction. This provides a mechanism capable of inhibiting breakage of reinforcing cords in the spiral cord layer 1 caused by a projection input given to an end of the spiral cord layer during running, which mechanism is described below.

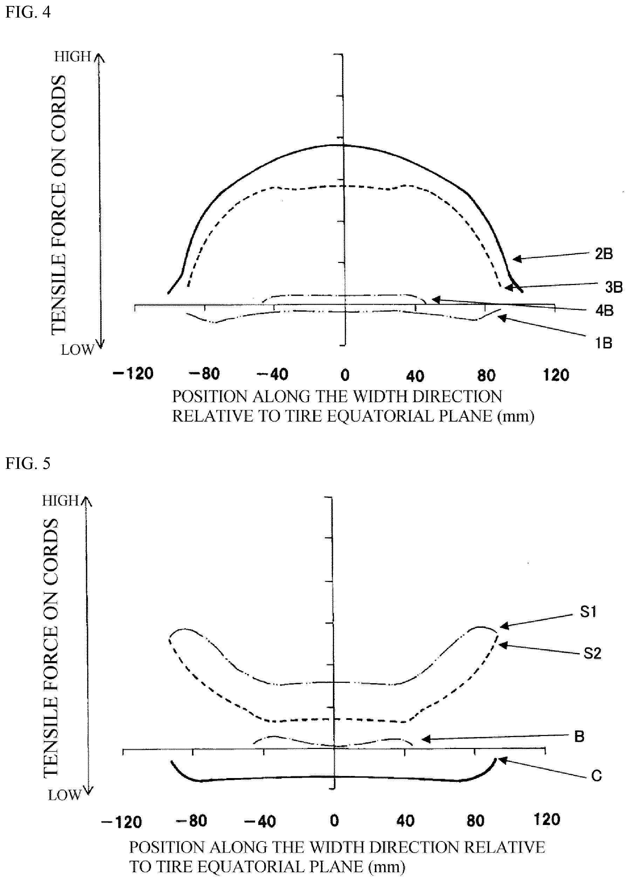

FIG. 4 is a graph indicating states of tensile forces applied to cords in four individual belts that are successively disposed tire-radially outside the crown portion of the carcass in an ordinary tire. In the figure, 1B to 4B respectively represent the four belts successively disposed from the inside with respect to the tire radial direction, designated as a first belt 1B to a fourth belt 4B. FIG. 5 is a graph indicating states of tensile forces applied to cords in individual layers in a tire structured such that the layers are made of a spiral cord layer and an auxiliary belt layer that are successively disposed tire-radially outside the crown portion of the carcass, with a core cord layer disposed between an upper layer and a lower layer of the spiral cord layer. In the figure, S1 represents the lower layer of the spiral cord layer, C represents the core cord layer, S2 represents the upper layer of the spiral cord layer, and B represents the auxiliary belt layer.

As shown in FIG. 4, in the ordinary tire in which four belts are disposed, a smaller tensile force is applied to ends of the individual belts. By contrast, as shown in FIG. 5, in the tire including the spiral cord layer, the core cord layer, and the auxiliary belt layer, a greater tensile force is applied to reinforcing cords at ends of the lower layer S1 and the upper layer S2 of the spiral cord layer with respect to the tire width direction. This is attributable to the fact that, unlike ordinary belts, the spiral cord layer has the upper layer and the lower layer connected at end portions with respect to the width direction. A greater tensile force is thus applied to ends of reinforcing cords in the spiral cord layer with respect to the tire width direction, and accordingly, it is believed that the reinforcing cords are more likely to break when a projection input is given to this region during running.

The present inventor has studied this matter to find that, when belt cords in the auxiliary belt layer disposed tire-radially outside the spiral cord layer are angled closer to the tire width direction, specifically, when the angle is approximately greater than 45° and equal to or less than 90° with respect to the tire circumferential direction, a higher tensile force is applied to reinforcing cords at ends of the spiral cord layer with respect to the tire width direction, with the result that the reinforcing cords are more likely to break when, for example, a projection input is given. This is conceivably because the belt cords in the auxiliary belt layer are burdened with almost no tire circumferential tensile force when the belt cords in the auxiliary belt layer are angled closer to the tire width direction. Therefore, in the present invention, the auxiliary belt layer 17 is disposed tire-radially outside the spiral cord layer 1 with belt cords in the auxiliary belt layer 17 making an angle within a range of 0° to 45° with respect to the tire circumferential direction, whereby the auxiliary belt layer 17 is burdened with a tire circumferential tensile force. This can reduce the tensile force imposed on reinforcing cords at ends of the spiral cord layer 1 with respect to the tire width direction, with the result that the durability of reinforcing cords in the spiral cord layer can be improved.

In the present invention, the angle of belt cords in the auxiliary belt layer 17 with respect to the tire circumferential direction needs to be within a range of 0° to 45°, preferably within a range of 0° to 20°. When the belt cord angle with respect to the tire circumferential direction exceeds 45°, the belt cords are burdened with almost no tire circumferential tensile force, thus failing to provide the effect of improving durability of reinforcing cords in the spiral cord layer.

The only important point of the tire of the present invention is that the auxiliary belt layer 17 satisfying the aforementioned conditions for the belt cord angle is disposed tire-radially outside the spiral cord layer 1, and consequently expected effects of the present invention can be obtained. Other configurations are not subject to any specific restriction and can be made as appropriate in accordance with a conventional method. In the present invention, when two or more layers equivalent to the auxiliary belt layer are disposed, expected effects of the present invention can be obtained as long as only the adjacent auxiliary belt layers disposed tire-radially outside the spiral cord layer satisfy the aforementioned conditions for the belt cord angle.

In the example illustrated in the figure, the spiral cord layer 1 includes the core cord layer 2 between the upper layer 1A and the lower layer 1B. In other words, the spiral cord layer 1 is formed by spirally winding reinforcing cords around the core cord layer 2; however, this is not restrictive in the present invention and the core cord layer 2 may be omitted. While the core cord layer 2 enhances the tire circumferential stiffness to improve the hoop effect, the core cord layer 2 tends to increase the tire circumferential tensile force applied to the reinforcing cords at ends of the spiral cord layer 1 with respect to the tire width direction as described above. The core cord layer 2, if disposed, may be a single layer, or may be formed by layering a plurality of layers, including, for example, 2 to 10 layers. The core cord layer 2 as mentioned herein is produced by having a large number of core cords arranged in parallel, placing unvulcanized rubber on top and bottom thereof, and coating the core cords with rubber. The number of reinforcing cords in the core cord layer 2 is preferably within a range of, for example, 5 to 60 cords/50 mm.

In the present invention, the angle of core cords in the core cord layer 2 with respect to the tire circumferential direction may be in a range of 40° to 90°. The angle of core cords falling within the above range allows the core cords to have a lower tensile force and to have much leeway until the core cords break. As a result, the core cords are less likely to break even when an obstacle input is given. To successfully exert such effect, the inclination angle of core cords in the core cord layer 2 is more preferably in a range of 50° to 90°. On the other hand, when the angle of the core cords in the core cord layer 2 with respect to the tire circumferential direction is closer to the tire width direction as described above, the aforementioned increase in tensile force on reinforcing cords at ends of the spiral cord layer 1 with respect to the tire width direction is more problematic, and thus it may be particularly useful to apply the present invention. In the case of disposing a plurality of core cord layers 2, the plurality of core cord layers 2 may form crossing belt layers.

In the present invention, the spiral cord layer 1 is formed by having one or more reinforcing cords, such as 2 to 100 reinforcing cords, arranged in parallel and coating the cords with rubber to obtain a rubber-cord complex, and spirally winding the complex into a flat strip or spirally winding the complex around the core cord layer 2. The number of reinforcing cords in the spiral cord layer 1 is preferably in a range of, for example, 5 to 60 cords/50 mm.

In the present invention, the angle of reinforcing cords in the spiral cord layer 1 is preferably within a range of 12° to 90° with respect to the tire circumferential direction.

Because the upper layer 1A and the lower layer 1B are not separated at ends of the spiral cord layer 1 with respect to the tire width direction, the spiral cord layer 1 is characteristic in that a tensile force is exerted when an inner pressure is applied to the tire and that the radial growth is suppressed. As a result, although the spiral cord layer 1 contributes to making the crown portion rounder, the reinforcing cords in the spiral cord layer 1 inclined at an angle of 12° or more can ensure that the radial growth is within a permissible extent when an inner pressure is applied and that the shoulder portion is inhibited from wearing. In the present invention, as the angle of reinforcing cords in the spiral cord layer 1, a value measured on an equatorial plane of the tire can be used. The angle is preferably within a range of 12° to 45°.

In addition, in the present invention, the auxiliary belt layer 17 is formed by having a large number of belt cords arranged in parallel and coating the belt cords with rubber.

In the present invention, no specific limitation is imposed on materials for the reinforcing cords in the spiral cord layer 1 and for the core cords in the core cord layer 2, and a variety of conventionally used general metal cords, organic fiber cords, or the like may be used as appropriate. Specifically, as examples of metal cords, steel filaments or steel cords obtained by twisting a plurality of steel filaments together can be used. In this case, various designs can be used for the twist structure of the cords, and various cross-sectional structures, twist pitches, twist directions, and distances between adjacent filaments can be applied to the cords. As the cross-sectional structure, various twist structures including single twist, layer twist, and multi-twist can be used, and flat cords in cross-sectional shape can also be used. Steel filaments included in the steel cords contain iron as a main component, and may contain various trace elements including carbon, manganese, silicon, phosphorus, sulfur, copper, and chromium. To improve adhesiveness with rubber, brass plating may be applied on the steel filaments.

Examples of the organic fibers that can be used include aramid fibers (aromatic polyamide fibers), polyketone (PK) fibers, poly para-phenylene benzobisoxazole (PBO) fibers, and polyarylate fibers. In addition, carbon fibers including polyacrylonitrile (PAN)-based carbon fibers, pitch-based carbon fibers, and rayon-based carbon fibers; glass fibers; and rock fibers (rock wool) including basalt fibers and andesite fibers can also be used. These reinforcing cords are preferably subjected to an adhesive treatment so as to improve adhesiveness with rubber. The adhesive treatment can be performed in accordance with a conventional method using a general adhesive such as an RFL adhesive. Furthermore, hybrid cords made up of at least two of the above-mentioned types of cords may be used.

In the present invention, any known rubber composition may be used, without specific limitation, as the coating rubber used for the spiral cord layer 1 and the core cord layer 2. For example, as a rubber component contained in the rubber composition used as the coating rubber, any known rubber component may be used, and examples thereof include natural rubbers and synthetic rubbers such as vinyl aromatic hydrocarbon-conjugated diene copolymers, polyisoprene rubber, butadiene rubber, butyl rubber, halogenated butyl rubber, and ethylene-propylene rubber. The rubber components may be used singly, or two or more thereof may be used in combination. From the viewpoint of adhesiveness with metal cords and fracture characteristics of the rubber composition, the rubber component is preferably composed of at least either one of a natural rubber and a polyisoprene rubber, or includes a natural rubber in an amount of not less than 50% by mass while the remainder is a synthetic rubber.

In the present invention, the rubber composition used for the coating rubber may contain, as appropriate in an ordinary amount, any compounding agent normally used in the rubber industry, examples of which include fillers such as carbon black and silica; softening agents such as aromatic oil; methylene donors such as methoxymethylated melamines including, for example, hexamethylenetetramine, pentamethoxymethylmelamine, and hexamethylene methylmelamine; vulcanization accelerators; vulcanization acceleration aids; and age resistors. In the present invention, the method of preparing the rubber composition used as the coating rubber is not particularly restricted; for example, sulfur, an organic acid cobalt salt, and various compounding agents may be kneaded into a rubber component using a Banbury mixer, a roll, or the like in accordance with a conventional method.

In the illustrated tire for trucks and buses 10, the auxiliary belt layer 17 may be an inclined belt in which belt cords are inclined at a predetermined angle with respect to the tire circumferential direction. As the reinforcing cords in the inclined belt layer, it is most common to use, for example, metal cords, particularly steel cords; however, organic fiber cords may also be used. The steel cords formed of steel filaments containing iron as a main component along with various trace elements such as carbon, manganese, silicon, phosphorus, sulfur, copper, and chromium may be used.

As the steel cords, not only the cords obtained by twisting a plurality of filaments together but also steel monofilament cords may be used. Various designs can be used for the twist structure of the steel cords, and various cross-sectional structures, twist pitches, twist directions, and distances between adjacent steel cords can be applied to the steel cords. Furthermore, the cords obtained by twisting filaments of different materials together can also be used. The cross-sectional structure thereof is not particularly restricted, and various twist structures such as single twist, layer twist, and multi-twist can be adopted. The width of the auxiliary belt layer 17 is preferably 40% to 115%, particularly preferably 50% to 70%, of the tread width. It is preferable to dispose a belt under-cushion rubber 18 tire-radially inside an end of the spiral cord layer 1. This can reduce the strain and temperature at an end of the spiral cord layer 1 to improve the tire durability.

For the carcass 14 in the tire for trucks and buses 10 of the present invention, a variety of structures including conventional structures can be adopted, and the carcass 14 may have a radial structure or a bias structure. The carcass 14 is preferably formed of one or two carcass plies made of steel cord layers. The carcass may have, for example, its maximum width position with respect to the tire radial direction on either side closer to the bead portion 13 or closer to the tread portion 11. For example, the maximum width of the carcass 14 may be positioned tire-radially outward from the bead base portion within a range of 50% to 90% of the tire height. In general, the carcass 14 preferably has a structure in which the carcass 14 extends between a pair of the bead cores 15 without interruption as illustrated; however, the carcass 14 can also be formed of a pair of carcass pieces extending from the respective bead cores 15 and being interrupted in the vicinity of the tread portion 11.

A variety of structures can be adopted for the turned-up portion of the carcass 14. For example, the turned-up end of the carcass 14 can be positioned tire-radially inside the upper end of the bead fillers 16, or the turned-up end of the carcass may extend tire-radially outward beyond the upper end of the bead filler 16 or the tire maximum width position, and in this case, the turned-up end may also extend tire-widthwise inward beyond an end of the spiral cord layer 1 with respect to the tire width direction. Furthermore, in the case of a plurality of carcass plies, the positions of the turned-up ends of the carcass 14 with respect to the tire radial direction may be different. Alternatively, the carcass 14 may have a structure in which the carcass 14 is sandwiched in a plurality of bead core members without turned-up portions, or a structure in which the carcass 14 is wound around the bead cores 15. The number of cords in the carcass 14 is usually within a range of 5 to 60 cords/50 mm; however, the number of cords is not limited thereto.

In the tire for trucks and buses 10 of the present invention, a circumferential cord layer (not illustrated) may be disposed tire-radially outside the spiral cord layer 1 and the auxiliary belt layer 17.

In the tire for trucks and buses 10 of the present invention, a known structure can also be adopted for the side wall portion 12. For example, the maximum width of the tire may be positioned tire-radially outward from the bead base portion within a range of 50% to 90% of the tire height. In the tire for trucks and buses 10 of the present invention, it is preferred that, unlike a tire for passenger vehicles, the side wall portion is formed as a smooth curve having a convex shape in the tire width direction, without forming a recess to come into contact with a rim flange.

For the bead core 15, a variety of structures can be adopted including a circular or polygonal shape. As described above, the bead portion 13 may have a structure in which the carcass 14 is wound around the bead core 15, or a structure in which the carcass 14 is sandwiched in a plurality of bead core members. In the illustrated tire for trucks and buses 10, the bead filler 16 is disposed tire-radially outside the bead core 15, and the bead filler 16 may be formed of a plurality of rubber members separated from each other in the tire radial direction.

In the tire for trucks and buses 10 of the present invention, the tread pattern may be a pattern mainly composed of rib-like land portions, a block pattern, or an asymmetrical pattern, and the tread pattern may have a designated rotation direction.

The pattern mainly composed of rib-like land portions is a pattern mainly composed of rib-like land portions defined in the tire width direction by at least one circumferential groove, or by circumferential grooves and tread ends. The rib-like land portions as used herein refer to land portions extending in the tire circumferential direction without any transverse groove across the tire width direction; however, the rib-like land portions may have sipes and transverse grooves terminating within rib-like land portions. Since a radial tire has a high ground contact pressure particularly when used at a high internal pressure, it is believed that the ground contact performance on a wet road is improved by increasing the circumferential shear rigidity. The pattern mainly composed of rib-like land portions can be, for example, a tread pattern in which a region corresponding to 80% of the tread width centered on the equatorial plane consists of rib-like land portions only, that is, the tread pattern may have no transverse groove. Such pattern largely contributes to drainage performance, in particular, to wet performance in this region.

The block pattern is a pattern having block land portions defined by circumferential grooves and across-the-width grooves, and a tire having such block pattern exhibits excellent basic on-ice performance and on-snow performance.

The asymmetrical pattern is a pattern in which the left and right tread patterns are asymmetrical with respect to the equatorial plane. For example, in the case of a tire having a designated mounting direction, the negative ratio may be different between the tire halves on the inner side and the outer side along the vehicle mounting direction divided by the equatorial plane, or the tire may be configured to have different numbers of circumferential grooves between the tire halves on the inner side and the outer side along the vehicle mounting direction divided by the equatorial plane.

The tread rubber is not particularly restricted, and any conventionally used rubber can be used. The tread rubber may be formed of a plurality of different rubber layers along the tire radial direction, and the tread rubber may have, for example, a so-called cap-base structure. As the plurality of rubber layers, the rubber layers different in loss tangent, modulus, hardness, glass transition temperature, material, and the like can be used. The thickness ratio of the plurality of rubber layers in the tire radial direction may vary along the tire width direction and, for example, only the bottom of a circumferential groove may be formed of a rubber layer different from the rubber layers therearound.

In addition, the tread rubber may be formed of a plurality of different rubber layers along the tire width direction, and the tread rubber may have a so-called divided tread structure. As the aforementioned plurality of rubber layers, the rubber layers different in loss tangent, modulus, hardness, glass transition temperature, material, and the like can be used. The length ratio of the plurality of rubber layers along the tire width direction may tire-radially vary, and only a limited region, such as only the vicinity of a circumferential groove, only the vicinity of a tread end, only the vicinity of a shoulder land portion, or only the vicinity of a center land portion, may be formed of a rubber layer different from the rubber layers therearound. Furthermore, a corner 11a is preferably formed at an end of the tread portion with respect to the tire width direction.

The tire illustrated in FIG. 1 is for trucks and buses; however, the present invention is not limited thereto and can be suitably applied to tires for passenger vehicles, for construction vehicles, for motorcycles, for airplanes, for agriculture, and so on. Regarding tire types, the present invention is not limited to pneumatic tires and can be applied to solid tires and non-pneumatic tires.

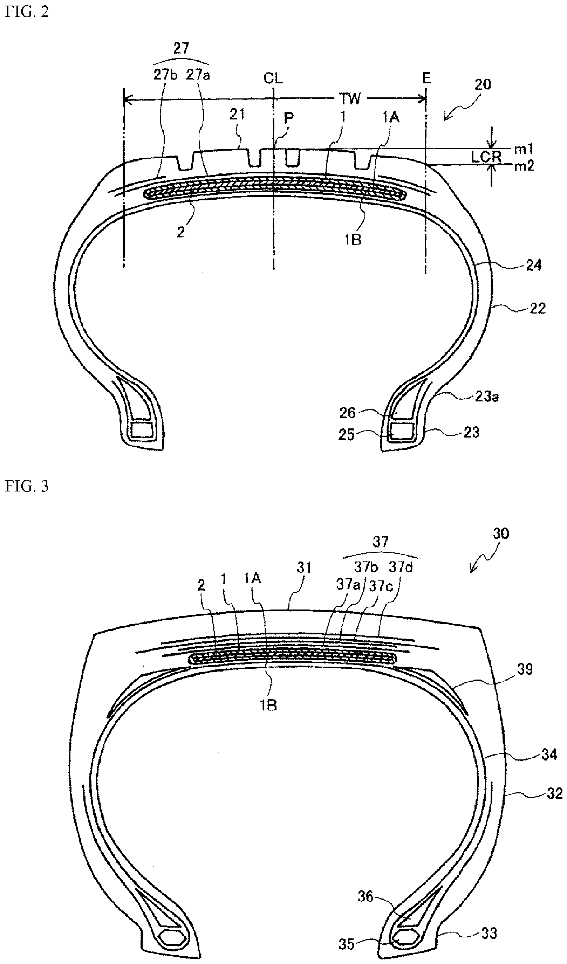

FIG. 2 is a tire transverse cross-sectional view illustrating an example configuration of a tire for passenger vehicles. The tire for passenger vehicles 20 as illustrated includes: a tread portion 21 forming a ground contact part; a pair of side wall portions 22 continuous with both ends of the tread portion 21 and extending tire-radially inward; and a bead portion 23 continuously extending on the inner circumferential side of each of the side wall portions 22. The tread portion 21, the side wall portions 22, and the bead portions 23 are reinforced by a carcass 24 composed of a single carcass ply toroidally extending from one bead portion 23 to the other bead portion 23. In the illustrated tire for passenger vehicles 20, a bead core 25 is embedded in each of the pair of the bead portions 23, and the carcass 24 is turned up around each of the bead cores 25 from the inside to the outside of the tire and is anchored. In addition, a bead filler 26 is disposed tire-radially outside the bead core 25.

The tire for passenger vehicles 20 as illustrated includes a spiral cord layer 1 and an auxiliary belt layer 27 disposed successively and tire-radially outside the crown portion of the carcass 24, the spiral cord layer 1 having a structure in which an upper layer 1A and a lower layer 1B are formed by spirally winding reinforcing cords.

In the present invention, it is important that the angle of belt cords in the auxiliary belt layer 27 with respect to the tire circumferential direction satisfies the aforementioned conditions, which provides effects of the present invention. In the case of the tire for passenger vehicles illustrated in FIG. 2, examples of the auxiliary belt layer 27 include a cap layer 27a disposed all along the width of the spiral cord layer 1 and beyond, and layered layers 27b disposed in areas covering both ends of the spiral cord layer 1. The cap layer 27a and the layered layers 27b each are typically formed by having a large number of cords arranged in parallel and coating the cords with rubber into a strip of certain width, and winding the strip in a spiral manner. The cap layer 27a and the layered layer 27b may each be disposed singly, or may be disposed in combination. Two or more cap layers and two or more layered layers may also be combined.

Various materials can be used for reinforcing cords for the cap layer 27a and the layered layer 27b, and representative examples thereof include rayon, nylon, polyethylene naphthalate (PEN), polyethylene terephthalate (PET), aramid, glass fibers, carbon fibers, and steel. From the viewpoint of lighter weight, using organic fiber cords is particularly preferable. As the reinforcing cords, monofilament cords, cords obtained by twisting a plurality of filaments together, or hybrid cords obtained by twisting filaments of different materials together can be used. In order to increase the breaking strength, wavy cords may also be used as the reinforcing cords. To increase the breaking strength, high-elongation cords having an elongation at break of, for example, 4.5 to 5.5% may also be used.

The number of cords in the cap layer 27a and the layered layer 27b is usually within a range of 20 to 60 cords/50 mm; however, the number of cords is not limited thereto. The cap layer 27a may have distributions of rigidity, material, number of layers, cord density, and the like along the tire width direction. For example, the number of layers can be increased only in an end portion with respect to the tire width direction or only in a central portion.

From the production viewpoint, it is particularly advantageous to configure the cap layer 27a and the layered layer 27b as spiral layers. In this case, these layers may be formed of strip-like cords in which a plurality of core wires are arranged in parallel on a plane and are bundled together by a wrapping wire with the parallel arrangement maintained.

For the carcass 24 in the tire for passenger vehicles 20 of the present invention, a variety of structures including conventional structures can be adopted, and the carcass 24 may have a radial structure or a bias structure. The carcass 24 is preferably formed of one or two carcass plies made of organic fiber cord layers. The carcass 24 may have its maximum width position with respect to the tire radial direction on, for example, either side closer to the bead portion 23 or closer to the tread portion 21. For example, the maximum width of the carcass 24 may be positioned tire-radially outward from the bead base portion within a range of 50% to 90% of the tire height. In general, the carcass 24 preferably has a structure in which the carcass 24 extends between a pair of the bead cores 25 without interruption as illustrated; however, the carcass 24 can also be formed of a pair of carcass ply pieces extending from the respective bead cores 25 and being interrupted in the vicinity of the tread portion 21 (not illustrated).

A variety of structures can be adopted for the turned-up portion of the carcass 24. For example, the turned-up end of the carcass 24 can be positioned tire-radially inside the upper end of the bead fillers 26, or the turned-up end of the carcass 24 may extend tire-radially outward beyond the upper end of the bead filler 26 or the tire maximum width position, and in this case, the turned-up end may also extend tire-widthwise inward beyond an end of the spiral cord layer 1 with respect to the tire width direction. Furthermore, in the case of a plurality of carcass plies, the positions of the turned-up ends of the carcass 24 with respect to the tire radial direction may be different. Alternatively, the carcass 24 may have a structure in which the carcass 24 is sandwiched in a plurality of bead core members without turned-up portions, or a structure in which the carcass 24 is wound around the bead cores 25. The number of cords in the carcass 24 is usually within a range of 5 to 60 cords/50 mm; however, the number of cords is not limited thereto.

In the case of the tire for passenger vehicles 20 of the present invention having a narrow width and a large diameter, as the shape of the tread portion 21 in tire transverse cross section, the ratio LCR/TW is preferably 0.045 or less, where LCR is a drop height represented by the tire radial distance between a straight line m1 passing through a point P on the tread surface in the tire equatorial plane CL and parallel with the tire width direction and a straight line m2 passing through the ground contact edge E and parallel with the tire width direction, and TW is the tread width of the tire. By limiting the ratio LCR/TW to this range, the crown portion of the tire is flattened (planarized), thus increasing the ground contact area and relieving the input (pressure) from the road surface, whereby the deflection rate in the tire radial direction can be reduced to improve the durability and wear resistance of the tire. The tread ends are preferably smooth.

The tread pattern may be a full-lug pattern, a pattern mainly composed of rib-like land portions, a block pattern, or an asymmetrical pattern, and the tread pattern may have a designated rotation direction.

The full-lug pattern may be a pattern including an across-the-width groove extending along the tire width direction from the vicinity of the equatorial plane to the ground contact ends and, in this case, the pattern may not necessarily include a circumferential groove. Such pattern mainly composed of transverse grooves is capable of, in particular, effectively exerting on-snow performance.

The pattern mainly composed of rib-like land portions is a pattern mainly composed of rib-like land portions defined in the tire width direction by at least one circumferential groove, or by circumferential grooves and tread ends. The rib-like land portions as used herein refer to land portions extending in the tire circumferential direction without any transverse groove across the tire width direction; however, the rib-like land portions may have sipes and transverse grooves terminating within rib-like land portions. Since a radial tire has a high ground contact pressure particularly when used at a high internal pressure, it is believed that the ground contact performance on a wet road is improved by increasing the circumferential shear rigidity. The pattern mainly composed of rib-like land portions can be, for example, a tread pattern in which a region corresponding to 80% of the tread width centered on the equatorial plane consists of rib-like land portions only, that is, the tread pattern may have no transverse groove. Such pattern largely contributes to drainage performance, in particular, to wet performance in this region.

The block pattern is a pattern having block land portions defined by circumferential grooves and across-the-width grooves, and a tire having such block pattern exhibits excellent basic on-ice performance and on-snow performance.

The asymmetrical pattern is a pattern in which tread patterns are asymmetrical with respect to the equatorial plane. For example, in the case of a tire having a designated mounting direction, the negative ratio may be different between the tire halves on the inner side and the outer side along the vehicle mounting direction divided by the equatorial plane, or the tire may be configured to have different numbers of circumferential grooves between the tire halves on the inner side and the outer side along the vehicle mounting direction divided by the equatorial plane.

The tread rubber is not particularly restricted, and any conventionally used rubber or a foamed rubber may be used. The tread rubber may be formed of a plurality of different rubber layers along the tire radial direction, and the tread rubber may have, for example, a so-called cap-base structure. As the plurality of rubber layers, the rubber layers different in loss tangent, modulus, hardness, glass transition temperature, material, and the like can be used. The thickness ratio of the plurality of rubber layers in the tire radial direction may vary along the tire width direction and, for example, only the bottom of a circumferential groove may be formed of a rubber layer different from the rubber layers therearound.

In addition, the tread rubber may be formed of a plurality of different rubber layers along the tire width direction, and the tread rubber may have a so-called divided tread structure. As the aforementioned plurality of rubber layers, the rubber layers different in loss tangent, modulus, hardness, glass transition temperature, material, and the like can be used. The length ratio of the plurality of rubber layers along the tire width direction may tire-radially vary, and only a limited region, such as only the vicinity of a circumferential groove, only the vicinity of a tread end, only the vicinity of a shoulder land portion, or only the vicinity of a center land portion, may be formed of a rubber layer different from the rubber layers therearound.

In the tire for passenger vehicles 20 of the present invention, a known structure can also be adopted for the side wall portion 22. For example, the maximum width of the tire may be positioned tire-radially outward from the bead base portion within a range of 50% to 90% of the tire height. A structure including a rim guard may also be used. In the tire for passenger vehicles 20 of the present invention, it is preferred that a recess 23a to come into contact with a rim flange is formed.

For the bead core 25, a variety of structures can be adopted including a circular or polygonal shape. As described above, the bead portion 23 may have a structure in which the carcass 24 is wound around the bead core 25, or a structure in which the carcass 24 is sandwiched in a plurality of bead core members. In the illustrated tire for passenger vehicles 20, bead fillers 26 are disposed tire-radially outside the respective bead cores 25; however, the bead fillers 26 may be omitted in the tire for passenger vehicles 20 of the present invention.

In the tire for passenger vehicles of the present invention, an inner liner, which is not illustrated in the drawing, may usually be disposed on the innermost layer in the tire. The inner liner may be formed of a rubber layer mainly composed of butyl rubber, or a film layer containing a resin as a main component. In addition, although not illustrated in the drawing, to reduce cavity resonance, the tire inner surface may be provided with a porous member or subjected to electrostatic flocking processing. Furthermore, the tire inner surface may include a sealant member for preventing air leakage upon puncture.

The tire for passenger vehicles 20 is not limited to a specific application. The tire can be used for applications including a summer tire, an all-season tire, and a winter tire. It is also possible to use the tire as a tire for passenger vehicles having a special structure, such as a side-reinforced run-flat tire including a crescent-shaped reinforcing rubber layer in the side wall portion 22 or a studded tire.

FIG. 3 is a tire transverse cross-sectional view illustrating an example configuration of a tire for construction vehicles. The tire for construction vehicles 30 as illustrated includes: a tread portion 31 forming a ground contact part; a pair of side wall portions 32 continuous with both ends of the tread portion 31 and extending tire-radially inward; and a bead portion 33 continuously extending on the inner circumferential side of each of the side wall portions 32. The tread portion 31, the side wall portions 32, and the bead portions 33 are reinforced by a carcass 34 composed of a single carcass ply toroidally extending from one bead portion 33 to the other bead portion 33. In the illustrated tire for construction vehicles 30, a bead core 35 is embedded in each of the pair of the bead portions 33, and the carcass 34 is turned up around each of the bead cores 35 from the inside to the outside of the tire and is anchored. In addition, a bead filler 36 is disposed tire-radially outside the bead core 35.

The tire for construction vehicles 30 as illustrated includes a spiral cord layer 1 and four belt layers 37a to 37d disposed successively and tire-radially outside the crown portion of the carcass 34, the spiral cord layer 1 having a structure in which an upper layer 1A and a lower layer 1B are formed by spirally winding reinforcing cords. In the tire for construction vehicles 30, these four belt layers 37 correspond to the auxiliary belt layer according to the present disclosure. In general, a tire for construction vehicles includes four to six belt layers. When the tire includes six belt layers, the first and second belt layers form an inner crossing belt layer group, the third and fourth belt layers form a middle crossing belt layer group, and the fifth and sixth belt layers form an outer crossing belt layer group. In the tire for construction vehicles according to the present invention, the inner crossing belt layer group is replaced with the spiral cord layer 1 and, as the middle and outer crossing belt layer groups, the auxiliary belt layers 37a to 37d are disposed. For a tire for construction vehicles including four belt layers, the first and second belt layers can be replaced with the spiral cord layer 1 and the third and fourth belt layers can be replaced with the auxiliary belt layers 37a and 37b.

In the case of six belt layers, with respect to the tread width direction, the width of the spiral cord layer 1 can be 25% to 70% of the width of the tread surface; the width of the auxiliary belt layers 37a and 37b can be 55% to 90% of the width of the tread surface; and the width of the auxiliary belt layers 37c and 37d can be 60% to 115% of the width of the tread surface.

In the present invention, it is important that the angle of belt cords in the auxiliary belt layer 37 with respect to the tire circumferential direction satisfies the aforementioned conditions, which provides expected effects of the present invention.

In the tire for construction vehicles 30 of the present invention, the auxiliary belt layer 37 can be an inclined belt formed of a rubberized layer of reinforcing cords, inclined at a predetermined angle with respect to the tire circumferential direction. As the reinforcing cords in the inclined belt layer, it is most common to use, for example, metal cords, particularly steel cords; however, organic fiber cords may also be used. The steel cords formed of steel filaments containing iron as a main component along with various trace elements such as carbon, manganese, silicon, phosphorus, sulfur, copper, and chromium may be used.

As the steel cords, not only the cords obtained by twisting a plurality of filaments together but also steel monofilament cords may be used. Various designs can be used for the twist structure of the steel cords, and various cross-sectional structures, twist pitches, twist directions, and distances between adjacent steel cords can be applied to the steel cords. Furthermore, the cords obtained by twisting filaments of different materials together can also be used. The cross-sectional structure thereof is not particularly restricted, and various twist structures such as single twist, layer twist, and multi-twist can be adopted. The inclination angle of reinforcing cords in other belt layers is preferably 10° or greater with respect to the tire circumferential direction. The maximum-width inclined belt layer having the greatest width among the auxiliary belt layers 37 preferably has a width in a range of 90% to 115%, particularly preferably 100% to 105%, of the tread width. It is preferable to dispose a belt under-cushion rubber 39 tire-radially inside an end of the auxiliary belt layer 37. This can reduce the strain and temperature at an end of the auxiliary belt layer 37 to improve the tire durability.

For the carcass 34 in the tire for construction vehicles of the present invention, a variety of structures including conventional structures can be adopted, and the carcass 34 may have a radial structure or a bias structure. The carcass 34 is preferably formed of one or two carcass plies made of steel cord layers. The carcass may have, for example, its maximum width position with respect to the tire radial direction on either side closer to the bead portion 33 or closer to the tread portion 31. For example, the maximum width of the carcass 34 may be positioned tire-radially outward from the bead base portion within a range of 50% to 90% of the tire height. In general, the carcass 34 preferably has a structure in which the carcass 34 extends between a pair of the bead cores 35 without interruption as illustrated; however, the carcass 34 can also be formed of a pair of carcass pieces extending from the respective bead cores 35 and being interrupted in the vicinity of the tread portion 31.

A variety of structures can be adopted for the turned-up portion of the carcass 34. For example, the turned-up end of the carcass 34 can be positioned tire-radially inside the upper end of the bead fillers 36, or the turned-up end of the carcass 34 may extend tire-radially outward beyond the upper end of the bead filler 36 or the tire maximum width position, and in this case, the turned-up end may also extend tire-widthwise inward beyond an end of the spiral cord layer 1 with respect to the tire width direction. Furthermore, in the case of a plurality of carcass plies, the positions of the turned-up ends of the carcass 34 with respect to the tire radial direction may be different. Alternatively, the carcass 34 may have a structure in which the carcass 34 is sandwiched in a plurality of bead core members without turned-up portions, or a structure in which the carcass 34 is wound around the bead cores 35. The number of cords in the carcass 34 is usually within a range of 10 to 60 cords/50 mm; however, the number of cords is not limited thereto.

In the tire for construction vehicles 30 of the present invention, a known structure can also be adopted for the side wall portion 32. For example, the maximum width of the tire may be positioned tire-radially outward from the bead base portion within a range of 50% to 90% of the tire height. In the tire for construction vehicles 30 of the present invention, it is preferred that a recess to come into contact with a rim flange is formed.

For the bead core 35, a variety of structures can be adopted including a circular or polygonal shape. As described above, the bead portion 33 may have a structure in which the carcass 34 is wound around the bead core 35, or a structure in which the carcass 34 is sandwiched in a plurality of bead core members. In the illustrated tire for construction vehicles 30, the bead filler 36 is disposed tire-radially outside the bead core 35, and the bead filler 36 may be formed of a plurality of rubber members separated from each other in the tire radial direction.

In the tire for construction vehicles 30 of the present invention, the tread pattern may be a lug pattern, a block pattern, or an asymmetrical pattern, and the tread pattern may have a designated rotation direction.

The lug pattern may be a pattern including an across-the-width groove extending along the tire width direction from the vicinity of the equatorial plane to the ground contact ends and, in this case, the pattern may not necessarily include a circumferential groove.

The block pattern is a pattern including a block land portion defined by a circumferential groove and an across-the-width groove. Particularly, in the case of a tire for construction vehicles, the blocks are preferably large from the durability viewpoint and, for example, the width of a block measured in the tire width direction is preferably 25% to 50% of the tread width.

The asymmetrical pattern is a pattern in which tread patterns are asymmetrical with respect to the equatorial plane. For example, in the case of a tire having a designated mounting direction, the negative ratio may be different between the tire halves on the inner side and the outer side along the vehicle mounting direction divided by the equatorial plane, or the tire may be configured to have different numbers of circumferential grooves between the tire halves on the inner side and the outer side along the vehicle mounting direction divided by the equatorial plane.

The tread rubber is not particularly restricted, and any conventionally used rubber can be used. The tread rubber may be formed of a plurality of different rubber layers along the tire radial direction, and the tread rubber may have, for example, a so-called cap-base structure. As the plurality of rubber layers, the rubber layers different in loss tangent, modulus, hardness, glass transition temperature, material, and the like can be used. The thickness ratio of the plurality of rubber layers in the tire radial direction may vary along the tire width direction and, for example, only the bottom of a circumferential groove may be formed of a rubber layer different from the rubber layers therearound.

In addition, the tread rubber may be formed of a plurality of different rubber layers along the tire width direction, and the tread rubber may have a so-called divided tread structure. As the aforementioned plurality of rubber layers, the rubber layers different in loss tangent, modulus, hardness, glass transition temperature, material, and the like can be used. The length ratio of the plurality of rubber layers along the tire width direction may tire-radially vary, and only a limited region, such as only the vicinity of a circumferential groove, only the vicinity of a tread end, only the vicinity of a shoulder land portion, or only the vicinity of a center land portion, may be formed of a rubber layer different from the rubber layers therearound.

For the tire for construction vehicles 30, the rubber gauge of the tread portion 31 is preferably thicker from the durability viewpoint, and the rubber gauge is preferably 1.5% to 4%, more preferably 2% to 3%, of the tire outer diameter. The ratio of the groove area to the ground contact surface of the tread portion 31 (negative ratio) is preferably not higher than 20%. This is because the tire for construction vehicles 30 is primarily used at low speed in dry areas and, therefore, it is not necessary to have a high negative ratio for drainage performance. As for the size of the tire for construction vehicles, the rim diameter is, for example, not less than 20 inches, particularly not less than 40 inches for a large-size tire.

### EXAMPLES

The present invention will now be described in more detail by way of examples.

Reinforcing cords were spirally wound around a single core cord layer, thereby preparing a reinforcing member structured to include the core cord layer disposed between an upper layer and a lower layer of a spiral cord layer. The reinforcing member was disposed tire-radially outside the crown portion of the carcass, and an auxiliary belt layer was further disposed tire-radially outside the reinforcing member, thereby preparing a tire for trucks and buses, as illustrated in FIG. 1, of tire size 275/80R22.5.

As core cords in the core cord layer and belt cords in the auxiliary belt layer, steel cords in 1 + 6 structure with steel filaments having a wire diameter of 1.13 mm were used. The inclination angle of the steel cords in the core cord layer was 70° with respect to the longitudinal direction of the reinforcing member. The inclination angle of the reinforcing cords in the spiral cord layer was 16° with respect to the longitudinal direction of the reinforcing member.

The steel cords in the auxiliary belt layer were inclined in the same direction as the direction of the reinforcing cords in the upper layer of the adjacent spiral cord layer, while the steel cords in the core cord layer were inclined in a direction opposite thereto. The number of cords in the core cord layer was 18.06 cords/50 mm, while the number of cords in the auxiliary belt layer was 24.21 cords/50 mm.

### <Durability Evaluation on Reinforcing Cords in Spiral Cord Layer>

In accordance with the breaking energy test defined in JIS D4230, on each of the obtained sample tires, a plunger was pressed against an end of the spiral cord layer in the tread portion, and the pressing amount of the plunger and a movement distance immediately before the tire broke were measured, a product of the two measurements was obtained, and the product was turned into an index value relative to the result, 100, of the test on the tire of Comparative Example 1, so that relative evaluations were conducted. A higher value represents higher durability.

### <In Case of PAN-Based Carbon Fiber Cords Used as Reinforcing Cords in Spiral Cord Layer>

Table 1 below shows results of durability evaluations in the case where PAN-based carbon fiber cords (cord structure: 12,000 dtex/1) were used as reinforcing cords in the spiral cord layer. The number of cords in the spiral cord layer was 27.65 cords/50 mm.

**[Table 1]**

| | Example 1 | Example 2 | Example 3 | Example 4 | Comparative Example 1 | Comparative Example 2 |
|---|---|---|---|---|---|---|
| Inclination angle of belt cords in auxiliary belt layer (°)*¹ | 0 | 15 | 30 | 45 | 50 | 90 |
| Durability of reinforcing cords in spiral cord layer (index value) | 106 | 103 | 102 | 101 | 100 | 100 |

| | | | | | | |
|---|---|---|---|---|---|---|
| *1) Angle of belt cords in the auxiliary belt layer with respect to the tire circumferential direction. | | | | | | |

### <In Case of Aramid Cords Used as Reinforcing Cords in Spiral Cord Layer>

Table 2 below shows results of durability evaluations in the case where aramid cords (cord structure: 3,340 dtex//2/3) were used as reinforcing cords in the spiral cord layer. The number of cords in the spiral cord layer was 25 cords/50 mm.

**[Table 2]**

| | Example 5 | Example 6 | Example 7 | Example 8 | Comparative Example 3 | Comparative Example 4 |
|---|---|---|---|---|---|---|
| Inclination angle of belt cords in auxiliary belt layer (°)*¹ | 0 | 15 | 30 | 45 | 50 | 90 |
| Durability of reinforcing cords in spiral cord layer (index value) | 105 | 103 | 102 | 101 | 100 | 100 |

As shown in the tables above, according to the present invention, it was confirmed that a tire that has a spiral cord layer including reinforcing cords on the crown portion of the tire can inhibit breakage of the reinforcing cords caused by a projection input given to an end of the spiral cord layer during running.

### DESCRIPTION OF SYMBOLS

- 1: Spiral cord layer
- 1A: Upper layer
- 1B: Lower layer
- 2: Core cord layer
- 10: Tire for trucks and buses
- 11, 21, 31: Tread portion
- 11a: Corner
- 12, 22, 32: Side wall portion
- 13, 23, 33: Bead portion
- 14, 24, 34: Carcass
- 15, 25, 35: Bead core
- 16, 26, 36: Bead filler
- 17, 27, 37a to 37d: Auxiliary belt layer
- 27a: Cap layer
- 27b: Layered layer
- 20: Tire for passenger vehicles
- 23a: Recess
- 18, 39: Belt under-cushion rubber
- 30: Tire for construction vehicles

## Claims

1. A tire comprising:
a carcass toroidally extending between a pair of bead portions; and
a spiral cord layer disposed tire-radially outside a crown portion of the carcass and including an upper layer and a lower layer that are formed by spirally winding reinforcing cords,
wherein an auxiliary belt layer is disposed tire-radially outside the spiral cord layer and an angle of belt cords in the auxiliary belt layer with respect to a tire circumferential direction is in a range of 0° to 45°.

2. The tire according to claim 1, comprising a core cord layer between the upper layer and the lower layer of the spiral cord layer.

3. The tire according to claim 2, wherein an angle of core cords in the core cord layer with respect to the tire circumferential direction is in a range of 40° to 90°.

4. The tire according to any one of claims 1 to 3, wherein an angle of the reinforcing cords in the spiral cord layer with respect to the tire circumferential direction is in a range of 12° to 90°.
